# EUROPEAN PATENT APPLICATION

(11) **EP 4 707 230 A1**
(43) Date of publication of application: **11.03.2026**
(21) Application number: 24000106.5
(22) Date of filing: 04.09.2024
(51) Int. Cl.: C01B 3/04, C01B 3/08, C01B 3/22

(54) **PROCESS AND REACTOR FOR GENERATION OF THERMAL AND RADIANT ENERGY, HYDROGEN AND CARBON MONOXIDE BY OXIDIZING PARTICULATE METAL**

(71) Applicant: Energy 13 GmbH, 07743 Jena (DE)
(72) Inventor: Portugues, Lawrence, 62840 Lorgies (FR); Dentler, Carsten, 61350 Bad Homburg (DE)
(74) Representative: Ackermann, Joachim

(57) **Abstract**

Disclosed is a process for oxidizing a metal and for generating hydrogen and carbon monoxide comprising the steps:
i) introduce an organic compound containing carbon and covalently attached thereto hydrogen, a particulate metal selected from the group consisting of silicon, magnesium, iron, titanium, zinc, aluminum or alloy containing two or more of these metals and an oxidant into a reaction chamber, and
ii) react the organic compound, the particulate metal and the oxidant from step i) in the reaction chamber to generate heat, electromagnetic radiation, oxidized metal, hydrogen and carbon monoxide.

The reactor contains a reaction chamber for reacting organic compound, particulate metal and oxidant. Via feed lines the reactants are introduced into the reaction chamber. One or more metering devices are present for metering the amount of reactants introduced into the reaction chamber. In the reaction chamber a flame is generated by the reaction of the reactants. The reaction of metal fuel with oxidant results in an oxidized metal and in the generation of thermal and radiant energy, hydrogen and carbon monoxide. The thermal and radiant energy generated by the oxidation reaction is recovered by using one or more heat exchangers.

## Description

### Technical Field

This invention relates to scalable metal-fuel concepts and to a reactor designed for oxidizing metal fuel and generating hydrogen and carbon monoxide for industrial use.

### Background of the Invention

This invention concerns the growing interest of transporting and storing energy, especially renewable helio-ecological energy and using metals for energy production without generation of carbon dioxide.

This invention addresses the need for energy in a helio-energy driven circular economy with optimized volumetric energy density transport and efficient release of energy.

Industrial branch standards in fact even grew into global use of charcoal carbon by itself as caloric or chemical feedstock in metallurgical processes practised until today. In such processes minerals especially oxides are reduded to manufacture specific metallurgical phases, such as steel or steel alloys and the reduction of electricity by graphite electrodes in classic aluminium smelters.

On the shoulders of the fossil carbon sources whether gas, refined crude oil or anthracite, all kinds of gasification and liquidation generated an interconnectivity of different manufacturing processes. Guided by the global or local energy prizes this interconnectivity allowed the chemical industry to switch their processes several times after the second world war or under political or block embargoes. As a consequence, even hydrogen and food feedstock or fertilizer were made available on that technical-economic basis and more direct procedures, such as electricity-to-fertilizers or hydrogen-to-metals, stepped back.

The urgent need for energy transport and hydrogen to yield or to produce metals regionally in the pure or technical form show their high enthalpic energetic state in a thermodynamic sense and together with their mineral oxides in turn would represent a high volumetric energy density to store and release energy.

This invention demonstrates a new optimized solution for the generation of thermal and radiant energy and hydrogen by providing a high volume-time yield conversion of stock metal yielding electricity on demand by using an easy and safe transport- infrastructure (global metal/metal-oxide cycle) and to use this process by producing hydrogen continuously at the same time.

### Prior art

Processes of using metals as fuel converters are generally known.

WO 2014/173991 A1 proposed a full developed chemical-industrial hyperbranch of circles using aluminium as an energy storage material which is reacted with CO₂ to generate thermal energy for caloric grid-energy production and at the same time for converting CO₂ to CO which is used as a base chemical for synthesis of chemicals.

Metal burners using air or oxygen gas with no chemical feedstock transformation are generally known.

In DIS-Vertrags Nr. 150401 Programm Solarchemie/Wasserstoff; Bundesamt für Energie BFE Schlussbericht Juni 2004; Aluminium als Brennstoff und Speicher; J. Wochele, Dr. Chr. Ludwig; Paul Scherer Institut CH-5232 Villigen results about the Aluminum-Alumina cycle as renewable electric energy storage are reported. Key hurdles for air or oxygen combustion of Aluminum metal to its oxide are disclosed. In this report a flame reactor was proposed and established which has been developed from an aluminum oxidizer. Most interestingly in this analysis it was stated that the biggest loss in such energy cycle would be the carbon electrode itself, so the today established industrial introduction of low abrasive electrodes would yield a reasonable energy-storage-energy cycle per se.

Another group, Trowell, focuses on reacting aluminum in contact with water to release the reaction enthalpy in the form of heat and hydrogen. The result would be instant access to clean power, with no release of greenhouse gases. In a 2018 talk Trowell explains the underlying reactions and potential applications of this technology concept. While laboratory work has shown that the use of metal fuels with heat engines is technically feasible, no one has yet demonstrated the conversion in practice. One concept has been disclosed, for example, by BERGTHORSON, J.M. ET AL.: "Metal-Water Combustion for Clean Propulsion and Power Generation", APPLIED ENERGY, vol. 186, 1 January 2017 (2017-01-01), pages 13 - 27, XP055746514

The next step toward turning the lab findings into usable technology, therefore, will be to build a prototype conversion and couple it to a heat engine, again with a focus to optimize particle conversion at lower temperatues by proposing specialty metal powders including nano-spheres; compare https://www.mcgill.ca/newsroom/- channels/news/could-metal-particles-be-clean-fuel-future, published 2015.

Bergthorson states that developing metal recycling processes that don't involve CO₂ emissions is also critical; compare https://www.mcgill.ca/newsroom/channels/- news/could-metal-particles-be-clean-fuel-future-257172.

For continuous use all academic or published industrial methods typically only show principles, hurdles and optimize few aspects of a continuous metal-fuel combustion. Fewer technical or academic theoretical considerations show solutions for metal-fuel reactors towards bulk material use and technically scalable processes.

Oxygen burners using special micronized Aluminium yield a stable continuous flame (F. Halter et al. in Applications in Energy and combustion Science, Vol. 13, https://doi.org/10.1016 (2023)). Al, Mg and the Alkali metals and their alloys are reported to show self-sustained air-oxygen reactions from gas propelled powder transport. The reported temperatures indicate the importance of the self sustained kinetic within the flame geometry.

WO 2021/228429 A1 disclosses the advantage of a liquid metal fuel present in all Al smelting architectures to be dispersed into a reactor with precursor gases containing H₂O or CO₂ and yields reasonable turnover together with the heat introcuced by the liquid aluminium into the system.

As cited above although there is lot of scientific and theoretical hypothesis work about reaction of Al with air, O₂, no technical burner or converter has been described that facilitates a stable flame under continuous dosing of solid Al and which does not plug and in air or oxygen only with the use of a micronized Aluminium preparation.

The use of Al as energy storing material and oxidation with air for heat generation in a pilot scale burner has been investigated in Paul Scherer Institute in Switzerland (compare J. Wochele, Chr. Ludwig; Aluminium als Brennstoff und Speicher. Bundesamt für Energie BFE (2004); https://infoscience.epfl.ch/record/165265).

Even after several steps of optimization the burner blocked although the oxidation of Al with an oxygen containing gas like air is understood to be easier to be conducted than the oxidation without oxygen.

Also, the particle size has an influence on the implementation of full oxidation of aluminium mass. For example, Dilip Srinivas Sundaram, Puneesh Puri, Vigor Yang; A general theory of ignition and combustion of nano- and micron-sized aluminum particles. Combustion and Flame Volume 169, July 2016, Pages 94-109. https://doi.org/10.1016/j.combustflame.2016.04.005 report that oxidation time increases significantly with particle size. Moreover, it is general knowledge that higher volume specific surface of smaller particles supports a decrease of ignition temperature.

Experiments have shown that particulate metals when transported through lines tend to agglomerate and to line-blocking. For generating self-sustained flames a continuous transport of fuel is indispenable.

The objective of the present invention is the provision of a process of converting selected metals in the presence of selected reactants which allows a sustained flame, which produces hydrogen and carbon monoxide and which is easy to implement.

Another objective of the present invention is the provision of a process for generation of self-sustained flames with low tendendy for agglomeration of the metal fuel in the feed lines.

Still another objective of the present invention is the provision of a process for transforming chemical energy into thermal and radiant energy and to generate at the same time hydrogen and carbon monoxide.

Another objective of the present invention is a reactor that is designed to carry out a process of effectively converting selected metals in an atmosphere comprising selected reactants by providing a self-sustained flame and generating hydrogen and carbon monoxide.

### Summary of the invention

Surprisingly it has been found that these objectives can be solved by providing an oxidation reaction between an organic compound containing carbon-hydrocarbon bonds combined with a selected particulate metal and an oxidant, preferably gaseous oxygen or air, under conditions in which the carbon from the organic compound is totally or predominantly converted into carbon monoxide and the oxygen is bound by the metal in the form of a metal oxide.

The present invention relates to a process for oxidizing a metal and for generating hydrogen and carbon monoxide comprising the steps:
i) introduce an organic compound containing carbon and covalently attached thereto hydrogen, a particulate metal selected from the group consisting of silicon, magnesium, iron, titanium, zinc, aluminum or alloy containing two or more of these metals and an oxidant into a reaction chamber, and
ii) react the organic compound, the particulate metal and the oxidant from step i) in the reaction chamber to generate heat, electromagnetic radiation, oxidized metal, hydrogen and carbon monoxide.

In a preferred embodiment of the process of this invention this comprises the steps:
ia) a mixture of an organic compound containing carbon and covalently attached thereto hydrogen and particulate metal selected from the group consisting of silicon, magnesium, iron, titanium, zinc, aluminum or alloy containing two or more of these metals is produced,
ib) the mixture of organic compound and particulate metal is combined with an oxidant in a reaction chamber or said mixture and said oxidant are combined upstream to the reaction chamber and this combination is transferred into the reaction chamber, and
ii) the combination from step ib) is reacted in the reaction chamber to generate heat, electromagnetic radiation, oxidized metal, hydrogen and carbon monoxide.

In another embodiment the invention relates to a reactor for oxidizing a metal and for generating hydrogen and carbon monoxide comprising the elements:
A) a reaction chamber,
B) at least one feed line for introducing an organic compound containing carbon and covalently attached thereto hydrogen into the reaction chamber or into a mixing device arranged upstream to the reaction chamber and discharging into the reaction chamber,
C) at least one feed line for introducing particulate metal selected from the group consisting of silicon, magnesium, iron, titanium, zinc, aluminum or alloy containing two or more of these metals into the reaction chamber or into a mixing device arranged upstream to the reaction chamber and discharging into the reaction chamber,
D) at least one metering device for metering the amount of organic compound or of particulate metal or of organic compound and particulate metal introduced into the reaction chamber said metering device being arranged upstream the reaction chamber in the feed line for organic compound or for particulate metal of for the mixture of organic compound and particulate metal,
E) at least one feed line for introducing an oxidant for the mixture of organic compound and particulate metal into the reaction chamber or into the mixing device arranged upstream to the reaction chamber and discharging into the reaction chamber, and optionally
F) at least one ignition device to ignite the mixture of organic compound, particulate metal and oxidant present in the reaction chamber thereby generating a flame in the reaction chamber.

### Detailed Description of the Invention

The invention comprises a scalable process and a scalable reactor for the generation of thermal and radiant energy which is transformed into power for local or grid use. Moreover, the process and reactor of this invention generate carbon monoxide and hydrogen, which are essential base chemicals for decarbonized processes including raw materials and goods such as steel, syngas, synfuel, food chain ingredients as well as chemicals. For this high conversion rates and continuous or quasi continuous operations are needed as well as fast start and shut down typical for large industrial reactors and ovens.

Standard methods in scaling and gas separation can now be applied using the breakthrough of the invention for high yield and high durability. The CO-toxicity and the hydrogen safety limits are known and well managed in large industrial settings. The fuel and the circulated materials in this economy are extremely inert and stable in human environment and environmentally friendly. The technology can be handled in all regions of the world and in all economies from local small equipment to large conglomerates and metropoles.

The process of this invention is preferably a continuous process. But the process can also be operated in a batchwise manner.

The process of this invention can be performed at ambient pressure or at elevated pressure. Typical pressures within the reactor are in a range between 1 and 100 bar, preferred between 1 and 50 bar und more preferred between 1 and 10 bar. Most preferred the process it operated at ambient pressure (about 1 bar).

The reactor and the process of this invention are scalable within a broad range. Typical scales range from 10 kW to 10 GW, preferably from 50 kW to 1 GW of electrical energy produced from the heat generated by the process or the reactor, respectively.

In step i) of the process of this invention an organic compound containing carbon and covalently attached thereto hydrogen, a particulate metallic fuel selected from silicon, magnesium, iron, aluminum or alloy containing these metals and an oxidant is introducted into a reaction chamber of a reactor. One or more of these feed stream(s) can optionally be diluted with inert gases, for example by nitrogen or argon or one or more separate feed stream(s) of inert gas can be used.

The single components introducted in step i) into the reaction chamber can be provided as single feed streams or as feed streams of a combination of two or more of these components.

In a preferred embodiment of the process of this invention in a step ia) a mixture of an organic compound containing carbon and covalently attached thereto hydrogen and particulate metallic fuel selected from silicon, magnesium, iron, aluminum or alloy containing these metals is producted. This feed stream can optionally be diluted with inert gases, for example by nitrogen or argon. By chosing this mixture of reactants a pumpable or sprayable mixture of particulate metal and organic compound is provided that can be easily transported into the reaction chamber. Solid particulate metals often create problems as these tend to agglomerate and to block feed lines.

In a preferred embodiment of the process of this invention in a step ib) an oxidant is combined with the mixture of step ia). This combination may take part in the reaction chamber by feeding separate streams of oxidant and organic compound-metal mixture into the reaction chamber. In an alternative embodiment oxidant and organic compound-metal mixture are introduced into a mixing device that is arranged upstream the reaction chamber. After mixing the oxidant-organic compound-metal combination the resulting mixture is fed into the reaction chamber.

In step ib) of the process of this invention an oxidant, such as oxygen, oxygen-containing gases, H₂O or CO₂ or mixtures containing H₂O, CO₂ and/or NH₃ are introduced into the inlet zone of the reaction chamber. This feed stream can optionally be diluted with inert gases, for example by nitrogen or argon.

Steps ia) and ib) can be carried out separately. Thus, the mixture of particulate metal and organic compound on the one hand and oxidant on the other hand can be introduced via separate feed lines into the reaction chamber. In an alternative embodiment steps ia) and ib) can be carried out in a combined manner. Thus particulate metal, organic compound and oxidant containing streams can be introduced as mixtures via one or more feed lines into the reaction chamber.

The mixture of organic compound, particulate metal and oxidant in the reaction chamber resulting from step i) or ib) is reacted in a step ii) to generate heat, electromagnetic radiation, oxidized metal, hydrogen and carbon monoxide.

The quantity of oxidant is generally selected in a manner that at least a major part, preferably the total amount of the carbon present in the organic compound and at least a part of the particulate metal are oxidized. Larger amounts of oxidant are also possible. This is especially the case if in addition to the organic compound-metal mixture additional metal fuel is introducted into the reaction chamber. The amount of oxidant should not exceed the amount necessary for complete oxidation of the metal; thus the amount of oxidant should be selected in a manner that all oxygen contained in the oxidant is finally bound in the metal oxide.

Between organic compound and metal on the one side and oxidant on the other side the following reactions play an important role: The organic compound is decomposed into hydrogen, carbon and optionally other pyrolysis products and these elements and pyrolysis products are oxidized by forming water and carbon oxides. Metal is oxidized by the oxidant, by the water and by the carbon oxides resulting in metal oxide, hydrogen and carbon monoxide. The overall process should be conducted in a manner that only minor portions of carbon dioxide is formed but that most of the carbon from the organic compound is emitted as carbon monoxide.

In step ii) of the process of this invention the mixture of organic compound, particulate metal and oxidant is caused to react. This can be performed by igniting the reactive mixture using an ignition device, such as an electric arc, a laser or a plasma generator. As an alternative hot reactor wall may be used to ignite the reactive mixture or said mixture when introduced into the reaction chamber has already a temperature to cause spontaneous combustion. In case there is already a reaction going on in the reaction chamber there is nothing to do. The reactive mixture will be ignited by the heat generated in the reaction chamber. The reaction between organic compound, particulate metal and oxidant generates heat, electromagnetic radiation, oxidized metal, hydrogen and carbon monoxide.

Different ignition devices can be used for igniting the mixture of organic compound, particulate metal and oxidant. Ignition devices are known to the skilled artisan.

Examples of ignition devices are electric arcs arranged in the inlet zone at the end of the feed line(s), inductive heaters or lasers arranged outside the reactor, the radiation of the laser being coupled into the reaction chamber through one or more windows in the reactor jacket or the inductive heater generating heat acting on the space region at the end of the feed line(s).

The particulate metal used in step i) or ia) may have a particle size in the range between 1 and 500 µm, but also particle sizes of smaller than 1 µm are possible. The heat of reaction between organic compound and particulate metal on the one side and oxidant on the other side will allow a substantial micronization and vapourisation in-process of the particulate metal fuel to improve conversion to a satisfactory steady state flame process. Statistical thermodynamic consideration shows that such heat of reaction results in a flame with core temperatures of 2500 °C and higher, preferably of 2700 °C and higher and most preferred of above 3000°C. This results in a self sustained flame zone.

In a preferred embodiment of the process of this invention the particulate metal used in step i) or ia) consists of metal particles with diameters of less than 100 µm, more preferred of less than 50 µm.

As an organic compound hydrocarbon used in step i) or ia) any organic chemical containing carbon, covalently bound hydrogen and optionally other elements can be used. Examples of organic compounds are alcohols, e.g. fatty alcohols, aldehydes, amines, amides, esters, carboxylic acids, e.g. fatty acids, ketones, aromatic compounds and preferably hydrocarbons. Organic compounds may be monomers, oligomers or polymers. Organic compounds may be saturated or unsaturated or aromatic. Organic compounds may contain - besides carbon and hydrogen atoms - oxygen, nitrogen, sulfur or phosphorous atoms. Mixtures of different hydrogen-containing organic compounds can be used.

Preferably, in step i) or ia) gaseous or liquid organic compounds, very preferred liquid or gasesous hydrocarbons are used.

Under a gaseous compound in this description is understood a compound that is gaseous at atmospheric pressure (101.3 kPa) and at 25°C.

Under a liquid compound in this description is understood a compound that is liquid at atmospheric pressure (101.3 kPa) and at 25°C.

Hydrocarbons may be aliphatic, cycloaliphatic or aromatic. Aliphatic or cycloaliphatic hydrocarbons may be saturated or may possess one or more ethylenically unsaturated bonds.

Examples of gaseous hydrocarbons are methane, ethane, propane, butane, ethylene, propylene or acetylene. Mixtures of two or more of these hydrocarbons may be used.

Examples of liquid hydrocarbons are pentane, hexane, cyclohexane, heptane, octane, nonane, decane, benzene, toluene or xylene. Mixtures of two or more of these hydrocarbons may be used, such as gasoline, petroleum or diesel fuel.

As an oxidant used in step i) or ib) oxygen or any oxygen-contining chemical can be used. Oxidants may be gaseous at atmospheric pressure and at 25°C or may be liquid at atmospheric pressure and at 25°C or may even be solid at atmospheric pressure and at 25°C. Oxydants may be inorganic or organic compounds comprising oxygen atoms.

Preferably liquid or especially gaseous oxidants are used in step i) or ib).

Examples of oxidants used in step i) or ib) are oxygen or oxygen-containing compounds, preferably oxygen, air, alcohols, ketones, per-compounds, such as peroxides or percarboxylic acids, water, carbon dioxide or nitrates.

In a preferred embodiment of the process of this invention the hydrocarbon is liquid at 25°C and atmospheric pressure, preferably an aliphatic hydrocarbon being liquid at 25°C and at atmospheric pressure or the hydrocarbon is gaseous at 25°C and at atmospheric pressure, preferably an aliphatic hydrocarbon being gaseous at 25°C and at atmospheric pressure.

The amount of organic compound used in step i) or ia) is chosen to result together with the oxidant in a flammable mixture that generates heat and electromagnetic radiation in the reaction chamber to cause at least a portion of the particulate metal to melt or to evaporate in order to initialize the reaction between particulate metal and oxidant. Generally, in step i) or ia) and ib) a molar ratio between carbon of organic compound and particulate metal of 0.1 or higher is used.

Preferably, the molar ratio between hydrogen of organic compound and particulate metal in step i) or ia) 5 or less, more preferred 2 or less.

Moreover, the amount of organic compound in the mixture produced in step ia) is chosen to produce a pumpable or sprayable mixture of organic compound and particulate metal, preferably a slurry comprising liquid organic compound and particulate metal.

In a preferred embodiment of the process of this invention the molar ratio between carbon of organic compound and particulate metal in step i) or ia) is between 0.1 and 5, preferably between 0.3 and 3.

In still another preferred embodiment of the process of this invention the particulate metal is magnesium, aluminium or an alloy containing aluminium and magnesium, preferably particulate aluminium is used.

The oxidant of step i) or ib) is preferably selected from the group consisting of from O₂, O₂-containing gases, and more preferred air, peroxides, water and carbon dioxide or a mixture of two or more of these.

Preferred is a process wherein in that in addition to the oxidant in step i) or ib) in a step iii) a supplemental oxidant for the metal is introduced into the reaction chamber, which supplemental oxidant is preferably selected from O₂, O₂-containing gases, preferably air, H₂O, CO₂ or a mixture of two or more of these and which supplemental oxidant reacts in a step iv) with the metal in the reaction chamber.

In another preferred embodiment of the process of the invention the reaction chamber has a cylindrical shape forming an inlet zone for reactants, a central zone and an outlet zone for a product gas, and that the organic compound the particulate metal, the oxdiant or the mixure of two or more thereof are introduced into the inlet zone via feed lines that are arranged parallel, tangential or perpendicular to the cylinder axis.

In a preferred version of this embodiment the organic compound, the particulate metal, the oxidant, the inert gas or a mixture comprising two or more of these ingredients are introduced into the inlet zone of the reaction chamber via a plurality of pipes tangentially extending through the cylindrical reactor jacket, as a result of which a vortex is formed in the reaction chamber which moves in the direction towards the outlet zone.

In another preferred version of this embodiment in that in addition to the particulate metal from step i) or ia) in an additional step v) a metal main fuel is introduced into the reaction chamber said metal main fuel being selected from the group consisting of silicon, magnesium, iron, titanium, zinc, aluminum or alloy containing two or more of these metals.

Metal main fuel can be used in the form of powder, granules, strips, wires, ingots, tinsels or strands, preferably through continuous or discontinuous reactor feeds, optionally using airlocks. Preferred are powders or tinsels of metals or metal alloys.

Preferably the metal main fuel is introduced into the reaction chamber in the form of powder, chips, pellets, ingots, tinsels or metal rods.

Particulate metal and metal main fuel can by prepared from the corresponding oxdies by melt electrolysis, preferably by using electricity from regenerative sources, such as photovoltacis or wind energy. Metallic fuel can also be used as metal scrap, preferably as Aluminium scrap.

The oxidation of the metal main fuel in a flow-through reactor is particularly preferred to occur in a gas mixture with a predominant flow of H₂O or CO₂ or H₂O and CO₂ or H₂O and NH₃ or H₂O, CO₂ and NH₃. The oxidation of the metal main fuel preferably occurs in the substantial absence of oxygen gas. In essence, this means that the controlled addition of small amounts of oxygen gas, while not optimal, is still possible in principle without affecting the reaction as described. However, better results are obtained in the absence of oxygen gas. Particularly preferably, therefore, the oxidation of metal main fuel is carried out in the absence of oxygen gas. Optionally inert gases can be present in the gas mixture in order to dilute the oxidant gas.

The metals or metal alloys used as a particulate metal or metal main fuel in the process of this invention are available as a metallic raw material on an industrial scale and represent an alternative to other transportable energy sources. The metals or metal alloys are inert and non-hazardous to store and transport. This gives these metals or metal alloys a significant advantage as an energy source over crude oil, natural gas or coal, which are considered to be much more hazardous to the environment from their exploitation, their refinement, distribution and transport as well as their downstream use.

As for steps i), ia) and ib) steps iii) and v) can be carried out separately. Thus the metal main fuel on the one hand and the supplemental oxidant on the other hand can be introduced via separate feed lines into the reaction chamber. In an alternative embodiment steps iii) and v) can be carried out in a combined manner. Thus streams containing metal main fuel and supplemental oxidant can be introduced as mixtures via one or more feed lines into the reaction chamber.

When a reaction in steps ii) and iv) takes place the reaction of the combination in step ii) results in at least one first flame that causes another reaction between the oxidant and/or the supplemental oxidant and the metal main fuel in step iv) to form a second flame.

In a preferred embodiment of the inventive process the reaction in step ii) or in steps ii) and iv) generates reaction heat with a flame core temperature in the range between 2500 and 3500°C, preferably between 2500 and 3000°C. This will guarantee an ignition of the metal fuel and formation as well as propagation of the the flame(s).

In a preferred embodiment the reaction in step ii) or in steps ii) and iv) generates temperatures to cause the particulate metal and, if present, at least a portion of the metal main fuel to evaporate. This can be achieved, for example, by controlling the throughput of organic compound, particulate metal and oxidant or by using a selected molar ratio of organic compound, particulate metal and oxidant in the reaction zone. Preferably temperatures of 2000°C or higher are generated, more preferred temperatures between 2000 and 3500°C, and very preferred temperatures between 2500 and 3000°C. The temperatures in the reaction zone are measured by using a radiation thermometer.

In a preferred embodiment of the process comprising a reaction in steps ii) and iv) a reactor is used having a reaction chamber with an inlet zone for reactants, a central zone and an outlet zone for a product gas, said process comprising at least the measures:
a) providing metal main fuel in the inlet zone of the reaction chamber,
b) introducing H₂O or CO₂ or mixtures containing H₂O, CO₂ and/or NH₃ or H₂O, CO₂ or said mixtures diluted with inert gases into the inlet zone of the reaction chamber,
c) introducing the organic compound, particulate metal and oxidant of step i), la) and ib) into said inlet zone using one or more feed lines ending in said inlet zone providing a mixture of said organic compound, particulate metal and oxidant at the end of said feed line(s),
d) generating a first flame by oxidizing the mixture of organic compound, particulate metal and oxidant at the end of said feed line(s) which first flame is directed towards the metal main fuel present in the inlet zone,
e) generating a reaction zone by the action of said first flame by melting and/or evaporating a portion of said metal main fuel thereby causing said metal main fuel to react with the H₂O, with the CO₂ or with the H₂O, CO₂ and/or NH₃ to generate a second flame resulting in a product gas containing hydrogen and oxidized metal or carbon monoxide and oxidized metal or hydrogen, carbon monoxide and/or nitrogen and oxidized metal and optionally inert gas(es),
f) discharging the product gas from the reaction chamber exit zone via a discharge line and introducing the product gas into a separation device for solids,
g) separating the solids from the product gas in the separation device, preferably a cyclone, thereby producing a purified product gas having no or a reduced solids content,
h) discharging the purified product gas from the separation device, and
i) transferring thermal and radiant energy generated in the reaction chamber, in the product gas and/or in the purified product gas into a heat transfer medium and using the recovered thermal energy for generation of electrical energy and/or for heating purposes.

In another preferred embodiment of the process of this invention hydrogen is generated from a hydrogen-containing chemical in a reactor having at least one first reaction space and at least one second reaction space which are separated from each other, wherein in the first reaction space thermal and radiant energy are generated by the oxidation reaction in step ii) defined above or in steps ii) and iv) defined above and in the second reaction space the hydrogen-containing chemical is " dehydrogenated into hydrogen and dehydrogenated product by using the thermal and radiant energy generated in the first reaction space.

In a preferred variant of this process the first reaction space and the second reaction space are separated from each other by a predetermined distance without a wall between the reaction spaces so that the thermal energy generated in the first reaction space can interact upon the hydrogen-containing chemical in the second reaction space or the first reaction space and the second reaction space are separated from each other by a wall so that the thermal and radiant energy generated in the first reaction space can interact via said wall upon the hydrogen-containing chemical in the second reaction space.

In still another preferred variant of this process the dehydrogenation of the hydrogen-containing chemical in the second reaction space is promoted by using electrical power to split the hot hydrogen-containing chemical into hydrogen and dehydrogenated product.

In a further preferred variant of this process the reactor has at least one first reaction space with an inlet zone for reactants, a reaction zone for the oxidation reaction and an outlet zone for an exhaust gas produced by the oxidation reaction, and said reactor has at least one second reaction space with an inlet zone for reactants, a reaction zone for reacting the reactants and an outlet zone for a product gas, wherein the first reaction space and the second reaction space are separated from each other by a predetermined distance without a wall between the reaction spaces or wherein the first reaction space and the second reaction space are separated from each other by a wall, and wherein the first reaction space surrounds the second reaction space or wherein the second reaction space surrounds the first reaction space.

In these process variants the hydrogen-containing chemical introduced into the at least one second reaction space is preferably selected from the group consisting of H₂O, NH₃, hydrogen and carbon containing compounds, preferably hydrocarbons, alcohols, aldehydes, carboxylic acids or mixtures of two or more thereof, more preferred H₂O, mixtures of NH₃ and H₂O, mixtures of CO₂ and H₂O, methane, ethane, ethylene, methanol, ethanol, formaldehyde, acetaldehyde, formic acid, acetic acid, fatty acids, fatty alcohols, aromatic compounds, methylcyclohexane or said compounds or mixtures diluted with inert gases.

The reaction product(s) hydrogen and carbon monoxide can be used advantageously in many industrial processes. Hydrogen can be used in many reduction processes, for example to produce metals, such as iron, from metal oxides, or to carry out hydrogenations of organic compounds. Hydrogen can also be used as a fuel or as a source of thermal energy. Mixtures of carbon monoxide and hydrogen can be used in many industrial processes to produce energy-rich hydrocarbon compounds, such as for the production of fuels, such as kerosene. Increased use of the process of the invention would provide carbon monoxide and/or hydrogen fuel for industrial purposes. The combustion of hydrocarbons from the reaction products of carbon monoxide and hydrogen would in turn provide carbon dioxide, which can again be fed to the process according to the invention or when comming from this process is at least CO₂-footprint neutral. The essential advantage of the process according to the invention thus consists in a universally, decentrally and rapidly applicable energy generation, without additional CO₂ pollution of the environment caused thereby, whereby the reaction product(s) hydrogen or hydrogen and carbon monoxide can be fed to a material cycle.

The thermal and radiant energy generated in the process of this invention is extracted and transferred into a heat transfer medium. This recovered thermal energy is used for generation of electrical energy and/or for heating.

The thermal and radiant energy generated in the reaction space, contained in the product gas and/or in the purified product gas is transferred into a heat transfer medium. This is preferably achieved by means of one or more heat exchangers connected with the reactor jacket and/or one or more heat exchangers connected with the discharge line between the reaction space exit zone and the separation device and/or one or more heat exchangers connected with a line removing the purified product gas from the separation device and/or arranged downstream the reactor.

Heat transfer media used in the heat exchanger(s) are known to the skilled artisan. Examples of heat transfer media are water, glycols, glycerine, molten metals, molten salts or thermal oils, such as silicones or high-boiling hydrocarbons. Preferred heat transfer media are water, thermal oils or molten salts.

The thermal energy contained in the heat transfer media can be supplied to an exploiting consumer. Exploiting consumers can be almost all technical and chemical energy converters. In particular, low-pressure or high-pressure steam turbines for power generation, Stirling engines and other heat engines or direct power generators on temperature gradients, thermolysis reactors, in particular reactors for water thermolysis to hydrogen can be mentioned as exploiting consumers.

The hydrogen or hydrogen/carbon monoxide generated in the process of this invention is stored or fed to a chemical conversion. The generated energy can be dissipated for energy conversion or heat or cold generation, e.g. for heating, by storing it or consuming it directly or indirectly. The thermal energy generated can, for example, be fed to a low-pressure or, preferably, a high-pressure steam turbine in order to generate electricity.

In a specific embodiment of the process and the reactor of this invention a portion of the heat generated in the process is backfeeded to the reactants introduced into the reactor. This includes backfeeding of partially reacted particle mixtures. These measures result in an increase of temperature of the feed streams.

The following example describes the invention without limiting it to the example.

### Example

An experimental set-up, as detailed in Jeanjean S., Bertsch J., Legros G., Chauveau C., Halter F. Thermal Structure of an Aluminum-Methane/air Hybrid Flame. Exp. Therm Fluid Sci., 153, p 111130 (2024) was used. The device was an axisymmetric profiled Bunsen burner designed for the combustion of a custom gaseous mixture containing dispersed aluminum particles. A methane-rich mixture (X_{CH4} = 0.15 was reacted with an oxidizing agent (X_{Ar} = 0.60, X_{O2} = 0.25 to produce gases at high temperature (T_{eq CH4)} = 2717 K). The composition of the gases produced can be calculated atequilibrium (only concentrations above 2% are indicated): (X_{Ar} = 0.55, X_{H2O} = 0.23, X_{CO} = 0.08, X_{CO2} = 0.06, X_{H2} = 0.04).

Using a methane-rich mixture avoids the presence of oxygen in the hot gases. This equilibrium calculation revealed that water vapor was the primary oxidant present. It is important to note that while the oxidizing efficiency of CO₂ is lower than that of water vapor (0.2 and 0.3 respectively), that of CO is 10 times lower than that of water vapor. Hydrogen is present in low concentrations. Aluminum particles, with an average diameter of 7.5 µm were transported by the gaseous premix, heated by the methane/oxygen flame and subsequently reacted with water vapor and carbon dioxide. The methane reacted first with the available oxygen, consuming all of it. The concentration of aluminum particles, set at 500 g/cm³, was sufficient to reduce all the water vapor to hydrogen.

The reactive flow was contained and separated from the surrounding air by a quartz cylinder. A stream of argon, smoothed by a porous disc, was blown around the torch.

A tube with a diameter of 1/8" that's connected to a vacuum tank was employed to collect the gases produced at a specific height in the plume of the reactive zone. Sampling began with the opening of a valve triggered when stable conditions were reached. A submicron filter with a pore diameter of 500 nm was used to capture some of the condensed particles found downstream of the reaction. The reactive zone can be approximately divided into two sections (from the burner outlet moving down-stream): The first section is where methane reacts with all the available oxygen (visible as a slight blue tint), which enables the metal particles to preheat (visible as orange particles). This is followed by a second, highly luminous section where aluminum primarily reacts with water vapor. The estimated temperature of the methane flame (T_{eq CH4)} = 2717 K) is higher than the melting temperature of aluminum (T_{f Al})= 994 K) and alumina (T_{f Al2O3)} = 2345 K), but lower than the evaporation temperature of aluminum (T_{vap Al)} = 2792 K).

These results demonstrate that the high-temperature reaction between water vapor and aluminum can jointly produce i) energy (heat) and ii) hydrogen. Downstream of the flow a white hue in the reactive zone is visible. This is a strong sign of considerable release of energy. This energy is split between the sensible heat contained in the two-phase flow and a significant radiative contribution. The white hue is indicative of temperatures reaching at least 3000 K.

The sampling tube's height has been adjusted to ensure that its open end is submerged in the area where the reaction between aluminum and water vapor occurs. Initially positioned away from the reactive zone, the tube's end is shifted into the flame zone to collect a sample once a valve opens, linking the tube to a reservoir that is initially in a vacuum state. The tube's end is rapidly obstructed by condensed particles (excess molten aluminum and alumina), but the suction duration is sufficient to reach about 40 mbar in the 1-liter tank. The submicron filter in front of the tank is also clogged at the end of the experiment.

A gas chromatographic analysis of the sampled gas mixture reveals the following composition: X_{Ar} = 0.664, X_{H2} = 0.157, X_{CO} = 0.069, X_{N2} = 0.084, X_{O2} = 0.022.

Besides the inert diluent, hydrogen is the dominant gaseous species. The content of water vapor is not measured. These results confirm that much of the water vapor reacted with the aluminum to produce hydrogen. Likewise, all of the carbon dioxide interacted with the aluminum, resulting in its reduction to carbon monoxide.

Notice the presence of nitrogen and oxygen. Prior to the experiment, the entire sampling system (tube + filter) was flushed with argon gas. However, it seems that the filter's internal volume was not adequately purged of air. This volume is relatively small (estimated at 0.8 mL, but it is significant considering the tank's end pressure 40 mbar. The ratio X_{N2} / X_{O2} close to that of air supports this hypothesis. The obtained volume fractions should be compared with those expected when considering the reaction of aluminum with the flue gases produced by the methane flame (equilibrium composition considered): X_{Ar} = 0.55, X_{H2} = 0.31, X_{CO} = 0.14. The measured mole fraction of argon is higher than expected due to the argon initially present in the tube. The expected ratio X_{H2} / X_{CO} ~ 2.3 aligns well with the experimentally measured value, confirming that water vapor and carbon dioxide reacted with the metal particles.

## Claims

1. A process for oxidizing a metal and for generating hydrogen and carbon monoxide comprising the steps:
i) introduce an organic compound containing carbon and covalently attached thereto hydrogen, a particulate metal selected from the group consisting of silicon, magnesium, iron, titanium, zinc, aluminum or alloy containing two or more of these metals and an oxidant into a reaction chamber, and
ii) react the organic compound, the particulate metal and the oxidant from step i) in the reaction chamber to generate heat, electromagnetic radiation, oxidized metal, hydrogen and carbon monoxide.

2. The process according to claim 1, **characterized in that** this comprises the steps:
ia) a mixture of an organic compound containing carbon and covalently attached thereto hydrogen and particulate metal selected from the group consisting of silicon, magnesium, iron, titanium, zinc, aluminum or alloy containing two or more of these metals is produced,
ib) the mixture of organic compound and particulate metal is combined with an oxidant in a reaction chamber or said mixture and said oxidant are combined upstream to the reaction chamber and this combination is transferred into the reaction chamber, and
ii) the combination from step ib) is reacted in the reaction chamber to generate heat, electromagnetic radiation, oxidized metal, hydrogen and carbon monoxide.

3. The process according to at least one of claims 1 or 2, **characterized in that** the organic compound is a hydrocarbon or a mixture of hydrocarbons that is liquid at 25°C and atmospheric pressure, preferably an aliphatic hydrocarbon or a mixture of aliphatic hydrocarbons being liquid at 25°C and at atmospheric pressure, or **in that** the organic compound is a hydrocarbon or a mixture of hydrocarbons that is gaseous at 25°C and at atmospheric pressure, preferably an aliphatic hydrocarbon or a mixture of aliphatic hydrocarbons being gaseous at 25°C and at atmospheric pressure.

4. The process according to at least one of claims 1 to 3, **characterized in that** the molar ratio between carbon of organic compound and particulate metal in step i) or ia) is between 0.1 and 5, preferably between 0.3 and 3.

5. The process according to at least one of claims 1 to 4, **characterized in that** the metal is magnesium, aluminium or an alloy containing aluminium and magnesium, preferably aluminium.

6. The process according to at least one of claims 1 to 5, **characterized in that** the oxidant is selected from the group consisting of from O₂, O₂-containing gases, preferably air, peroxides, water and carbon dioxide or a mixture of two or more of these.

7. The process according to at least one of claims 1 to 6, **characterized in that** in addition to the oxidant in step ii) in a step iii) a supplemental oxidant for the metal is introduced into the reaction chamber, which supplemental oxidant is selected from O₂, O₂-containing gases, preferably air, H₂O, CO₂, CO or a mixture of two or more of these and which supplemental oxidant reacts in a step vi) with the metal in the reaction chamber.

8. The process according to at least one of claims 1 to 7, **characterized in that** the reaction space has a cylindrical shape forming an inlet zone for feed streams, preferably for reactants, a central zone and an outlet zone for a product gas, and that the feed streams, preferably the organic compound, the particulate metal, the oxdiant or the mixure of two or more thereof are introduced into the inlet zone via feed lines that are arranged parallel or perpendicular to the cylinder axis.

9. The process according to at least one of claims 1 to 8, **characterized in that** the feed streams, preferably the organic compound, the particulate metal, the oxidant, the inert gas or the mixture of two or more thereof are introduced into the inlet zone of the reaction chamber via a plurality of pipes tangentially extending through the cylindrical reactor jacket, as a result of which a vortex is formed in the reaction chamber which moves in the direction towards the outlet zone.

10. The process according to claims 7 to 9, **characterized in that** in addition to the particulate metal in a step v) a metal main fuel is introduced into the reaction chamber said metal main fuel being selected from the group consisting of silicon, magnesium, iron, titanium, zinc, aluminum or alloy containing two or more of these metals, which metal main fuel is preferably introduced into the reaction chamber in the form of a powder, chips, pellets, ingots, tinsels or metal rods.

11. The process according to at least one of claims 1 to 10, **characterized in that** the particulate metal,theorganic compound, the oxidant, the inert gas or the mixture containing two or more thereof are introduced into the inlet zone of a cylindrical reaction chamber via one or more axially and/or radially and/or tangentially extending pipes.

12. The process according to at least one of claims 1 to 11, **characterized in that** the particulate metal, theorganic compound, the oxidant, the inert gas or the mixture containing two or more thereof are introduced into the inlet zone of the reaction chamber via a plurality of pipes tangentially extending through the reactor jacket, as a result of which a vortex is formed in the reaction chamber which moves in the direction towards the outlet zone.

13. The process according to claim 10, **characterized in that** the reaction of the combination in step v) results in at least one first flame that causes reaction in step iv) between the oxidant and/or the supplemental oxidant and the metal main fuel to form a second flame.

14. The process according to claim 13, **characterized in that** a reactor is used having a reaction chamber with an inlet zone for reactants, a central zone and an outlet zone for a product gas, said process comprising at least the measures:
a) providing metal main fuel in the inlet zone of the reaction chamber,
b) introducing H₂O or CO₂ or mixtures containing H₂O, CO₂ and/or NH₃ or H₂O, CO₂ or said mixtures diluted with inert gases into the inlet zone of the reaction chamber,
c) introducing the organic compound, particulate metal and oxidant into said inlet zone using one or more feed lines ending in said inlet zone providing a mixture of said organic compound, particulate metal and oxidant at the end of said feed line(s),
d) generating a first flame by oxidizing the mixture of organic compound, particulate metal and oxidant at the end of said feed line(s) which first flame is directed towards the metal main fuel present in the inlet zone,
e) generating a reaction zone by the action of said first flame by melting and/or evaporating a portion of said metal main fuel thereby causing said metal main fuel to react with the H₂O, with the CO₂ or with the H₂O, CO₂ and/or NH₃ to generate a second flame resulting in a product gas containing hydrogen and oxidized metal or carbon monoxide and oxidized metal or hydrogen, carbon monoxide and/or nitrogen and oxidized metal and optionally inert gas(es),
f) discharging the product gas from the reaction chamber exit zone via a discharge line and introducing the product gas into a separation device for solids,
g) separating the solids from the product gas in the separation device, thereby producing a purified product gas having no or a reduced solids content,
h) discharging the purified product gas from the separation device, and
i) transferring thermal and radiant energy generated in the reaction chamber, in the product gas and/or in the purified product gas into a heat transfer medium and using this thermal energy for generation of electrical energy and/or for heating purposes.

15. The process according to at least one of claims 1 to 14, **characterized in that** in the process hydrogen is generated from a hydrogen-containing chemical in a reactor having at least one first reaction space and at least one second reaction space which are separated from each other, wherein in the first reaction space thermal and radiant energy is generated by the oxidation reaction in step ii) of claim 1 or in steps ii) and iv) of claims 1 and 15 and in the second reaction space the hydrogen-containing chemical is dehydrogenated into hydrogen and dehydrogenated product by using the thermal and radiant energy generated in the first reaction space.

16. The process according to claim 15, **characterized in that** the first reaction space and the second reaction space are separated from each other by a predetermined distance without a wall between the reaction spaces so that the thermal and radiant energy generated in the first reaction space can interact upon the hydrogen-containing chemical in the second reaction space or that the first reaction space and the second reaction space are separated from each other by a wall so that the thermal and radiant energy generated in the first reaction space can interact via said wall upon the hydrogen-containing chemical in the second reaction space.

17. The process according to at least one of claims 17 or 18, **characterized in that** the dehydrogenation of the hydrogen-containing chemical in the second reaction space is promoted by using electrical power to split the hot hydrogen-containing chemical into hydrogen and dehydrogenated product.

18. The process according to at least one of claims 15 to 17, **characterized in that** the reactor has at least one first reaction space with an inlet zone for reactants, a reaction zone for the oxidation reaction and an outlet zone for an exhaust gas produced by the oxidation reaction, and said reactor has at least one second reaction space with an inlet zone for reactants, a reaction zone for reacting the reactants and an outlet zone for a product gas, wherein the first reaction space and the second reaction space are separated from each other by a predetermined distance without a wall between the reaction spaces or wherein the first reaction space and the second reaction space are separated from each other by a wall, and wherein the first reaction space surrounds the second reaction space or wherein the second reaction space surrounds the first reaction space.

19. The process according to at least one of claims 15 to 18, **characterized in that** the hydrogen-containing chemical introduced into the at least one second reaction space is selected from the group consisting of H₂O, NH₃, hydrogen and carbon containing compounds, preferably hydrocarbons, alcohols, carboxylic acids or mixtures of two or more thereof, more preferred H₂O, mixtures of NH₃ and H₂O, mixtures of CO₂ and H₂O, methane, ethane, ethylene, methanol, ethanol, formaldehyde, acetaldehyde, formic acid, acetic acid, fatty acids, fatty alcohols, aromatic compounds, methylcyclohexane or said compounds or mixtures diluted with inert gases.

20. The process according to at least one of claims 1 to 19, **characterized in that** the particulate metal consists of metal particles with diameters of less than 100 µm.

21. A reactor for oxidizing a metal and for generating hydrogen and carbon monoxide comprising the elements:
A) a reaction chamber,
B) at least one feed line for introducing an organic compound containing carbon and covalently attached thereto hydrogen into the reaction chamber or into a mixing device arranged upstream to the reaction chamber and discharging into the reaction chamber,
C) at least one feed line for introducing a particulate metal selected from the group consisting of silicon, magnesium, iron, titanium, zinc, aluminum or alloy containing two or more of these metals into the reaction chamber or into a mixing device arranged upstream to the reaction chamber and discharging into the reaction chamber,
D) at least one metering device for metering the amount of organic compound or of particulate metal or of organic compound and particulate metal introduced into the reaction chamber said metering device being arranged upstream the reaction chamber in the feed line for organic compound or for particulate metal of for the mixture of organic compound and particulate metal,
E) at least one feed line for introducing an oxidant for the mixture of organic compound and particulate metal into the reaction chamber or into the mixing device arranged upstream to the reaction chamber and discharging into the reaction chamber, and optionally
F) at least one ignition device to ignite the mixture of organic compound, particulate metal and oxidant present in the reaction chamber thereby generating a flame in the reaction chamber.

22. The reactor according to claim 21, **characterized in that** this in addition to elements A) to E) and optionally F) contains
G) at least one feed line for introducing a metal main fuel into the reaction chamber said metal main fuel being selected from the group consisting of silicon, magnesium, iron, titanium, zinc, aluminum or alloy containing two or more of these metals, and
H) at least one feed line for introducing an oxidant for the metal main fuel into the reaction chamber, said oxidant being selected from H₂O, CO₂, CO or a mixture of two or more of these.

23. The reactor according to claims 21 or 22 for producing hydrogen from a hydrogen-containing chemical, **characterized in that** said reactor having at least one first reaction space and at least one second reaction space which are separated from each other, wherein in the first reaction space thermal energy and electromagnetic radiation are generated by an oxidation reaction between an organic compound, a particulate metal and an oxidant in a reaction chamber and in the second reaction space the hydrogen-containing chemical is dehydrogenated into hydrogen and dehydrogenated product by using thermal energy generated in the first reaction space.
